# FASCICULE DE BREVET EUROPEEN

(11) **EP 2 089 756 B1**
(45) Date de publication et mention de la délivrance du brevet: **16.03.2016**
(21) Numéro de dépôt: 07858701.1
(22) Date de dépôt: 15.11.2007
(51) Int. Cl.: G02C 7/02, G02C 7/10

(54) **LENTILLES OPHTALMIQUES COLOREES POUR DYSLEXIQUES**
FARBIGE BRILLENGLÄSER FÜR PERSONEN MIT DYSLEXIE
COLOURED OPHTHALMIC LENSES FOR PEOPLE WITH DYSLEXIA

(30) Priorité: 17.11.2006 FR 0610096
(43) Date de publication de la demande: 19.08.2009
(73) Titulaire: Essilor International (Compagnie Générale d'Optique), 94220 Charenton-le-Pont (FR)
(72) Inventeur: GIRAUDET, Guillaume, 94220 Charenton-le-Pont (FR)
(74) Mandataire: Cabinet Plasseraud
(86) Numéro de dépôt international: PCT/FR2007/052345
(87) Numéro de publication internationale: WO 2008/059176

(56) Documents cités:
- EP-A- 0 614 106
- WO-A-01/05300
- FR-A- 1 388 995
- GB-A- 2 266 786
- GB-A- 2 374 428
- SE-C2- 514 506
- US-A- 4 961 640

## Description

La présente invention se rapporte au domaine de la coloration de lentilles ophtalmiques. Plus particulièrement, l'invention concerne un nouveau design de coloration de lentilles ophtalmiques.

Au sens de l'invention, on entend par lentilles ophtalmiques des lentilles correctrices et non correctrices, qui s'adaptent notamment à une monture de lunettes. On entend également au sens de l'invention par lentilles ophtalmiques des lentilles prismatiques, elles mêmes correctrices ou non correctrices. Par contre le terme lentille ophtalmique n'englobe pas les lentilles de contact colorées, directement posées sur l'oeil, telles que celles décrites par exemple dans la demande de brevet GB 2 266 786. En effet, comme il sera expliqué ci-après, il est important pour la présente invention que l'oeil puisse explorer successivement et/ou alternativement différentes zones de la lentille, passant d'une zone colorée à une zone incolore et inversement. Un tel passage du regard d'une zone à une autre est impossible dans le cas d'une lentille de contact où l'oeil a une position essentiellement fixe par rapport à la lentille, que le sujet soit en activité de lecture ou en vision de loin.

La dyslexie développementale est définie comme un trouble durable de l'apprentissage du langage écrit en dépit de capacités intellectuelles normales, d'une absence de troubles psychiatriques ou neurologiques, d'un milieu socio-culturel normalement stimulant et d'une scolarisation adéquate. Ce trouble reflète un dysfonctionnement du système cognitif responsable de la lecture. La dyslexie concerne 8 à 10 % des enfants scolarisés et persiste durant toute la vie de l'individu, ce malgré une motivation normale. Les dyslexies développementales doivent être distinguées des dyslexies acquises qui sont la conséquence de lésions cérébrales. La plupart des dyslexiques commettent souvent les mêmes types d'erreurs : ils confondent les lettres morphologiquement similaires (telles que p et q, b et d) et font des erreurs visuelles au niveau des mots. Ils ont des difficultés à appréhender les mots dans leur globalité et pallient souvent leurs problèmes de déchiffrage en devinant les mots plutôt qu'en les lisant véritablement. Ils connaissent également des difficultés avec les règles grapho-phonémiques (notamment pour les ensembles de lettres complexes) les amenant souvent à inverser des lettres, voire même des syllabes. La dyslexie est parfois accompagnée d'autres troubles tels que des troubles du langage oral (dysphasie), du langage écrit (dysorthographie), de la mémoire immédiate, de la coordination motrice, ou encore des traitements visuo-spatiaux. Peuvent également s'ajouter une dyscalculie ou un syndrome hyperactif avec déficit attentionnel. La dyslexie doit donc être considérée comme un dysfonctionnement global de l'apprentissage.

Les théories explicatives de la dyslexie sont nombreuses et font intervenir un défaut de latéralité, des troubles psychoaffectifs et surtout un défaut de vigilance et d'attention. D'autres causes sont discutées dans l'échec de l'acquisition du langage écrit: un trouble mineur lésionnel du fonctionnement cérébral, un environnement socioculturel et économique défavorable, des méthodes d'apprentissage de la lecture inadaptées, des rythmes de progression des acquisitions non respectés.

Etonnamment, la fréquence de la dyslexie est passée de 3% à environ 10% en une trentaine d'années, remettant en cause l'idée courante que la dyslexie est une maladie d'origine purement organique. Les troubles comportementaux associés à la dyslexie peuvent être améliorés à l'aide de rééducations phonologiques, orthoptiques, etc. De nombreux travaux relatent l'utilisation de filtres colorés pour traiter les troubles de la lecture. Ces filtres peuvent être de couleur variée, et, selon Williams GT et al. Optometry, 2004 Nov; 75(11):720-2*,* la prescription de tels filtres est un processus empirique difficilement répétable, nécessitant l'ajustement de la couleur du filtre dans la première année du port. Plusieurs documents concernent ainsi l'utilisation de filtres colorés. Par exemple, les travaux de Solan HA et al. J.Am.Optom.Assoc.1997 Aug;68(8):503-10 montrent que des filtres bleus sont susceptibles d'améliorer les performances de patients atteints de troubles de la lecture. Par ailleurs, US4961640 prévoit l'utilisation de filtres de couleur rose pour traiter les patients atteints du syndrome d'Irlen, considéré comme une dyslexie particulière. Enfin, Ray, Fowler, Stein, 2005, Ann N Y Acad Sci. 1039: 283-293 montrent que les performances de lecture des dyslexiques sont améliorées lorsqu'ils portent un filtre jaune devant les yeux : de tels filtres augmentent la sensibilité au mouvement, la convergence et l'accommodation chez les enfants présentant des difficultés de lecture.

Toutefois, quelque soit la couleur des filtres préconisés, aucun document n'a tenu compte du fait que, au-delà de l'amélioration procurée par ces filtres, la perception des couleurs par un enfant portant des lunettes avec des verres colorés est sensiblement détériorée. En effet, les écoliers dyslexiques utilisant des filtres colorés sont poussés à enlever et remettre leurs lunettes selon qu'ils regardent le tableau en vision de loin ou leur feuille en vision de près. Ainsi, le port de ce type de filtre n'est pas commode pour ces enfants et il serait utile de proposer une solution pour rendre l'utilisation des filtres de couleur plus adaptée à l'utilisation qu'en font les jeunes enfants.

Le problème technique que se propose de résoudre la présente invention est donc l'amélioration des capacités de lecture des dyslexiques par utilisation de filtres colorés sans perturber la vision normale des couleurs.

Ce problème a été résolu selon la présente invention grâce à des lentilles ophtalmiques comportant une zone colorée dont l'étendue est essentiellement limitée à la zone de la lentille explorée par le regard de l'utilisateur en activité de lecture. La coloration dans la zone de lecture de la lentille joue ainsi le rôle connu d'amélioration des performances de lecture, mais ce dans une zone très limitée de la lentille ce qui permet d'éviter toute pertubation de la vision normale des couleurs en vision de loin.

La présente invention a par conséquent pour objet une lentille ophtalmique, telle que définie dans la revendication 1, qui comprend, à sa surface, une zone colorée dont l'étendue est limitée à la zone de la lentille explorée par l'oeil en activité de lecture, le reste de la lentille étant incolore.

La zone colorée telle que définie ci-dessus, présente une transmission minimale pour les longueurs d'ondes inférieures à 480 nm, et une transmission maximale dans le spectre du visible (entre 400 et 700 nm (nanomètre)) pour les longueurs d'ondes supérieures à 480 nm.

D'une façon avantageuse, la zone colorée présente une transmission inférieure ou égale à 50% dans le domaine des longueurs d'ondes comprises entre 400nm et 480 nm, et plus préférentiellement une transmission inférieure ou égale à 30% dans le domaine des longueurs d'ondes comprises entre 400nm et 480 nm.

La zone colorée telle que définie ci-dessus est de couleur jaune, jaune-orangé ou orange, couleurs qui se sont avérées particulièrement efficaces. Dans ce mode de réalisation, le fait que la zone colorée en jaune, jaune-orangé ou orange soit limitée essentiellement à la zone explorée par l'oeil en activité de lecture, présente l'avantage supplémentaire de prévenir une éventuelle perturbation du rythme circadien, constatée chez des patients portant, pendant des périodes prolongées, des filtres absorbant la lumière bleue. Dans la présente invention, au contraire, la zone incolore périphérique, laisse passer suffisamment de lumière bleue dont il a été montré qu'elle était essentielle dans la régulation de l'alternance veille/sommeil.

Dans un mode de réalisation de l'invention, la lentille ophtalmique est une lentille ophtalmique afocale ou une lentille ophtalmique unifocale. Dans ce mode de réalisation, la zone colorée possède une forme circulaire ou ovale. Avantageusement, le diamètre de la zone circulaire colorée, ou la dimension la plus importante de la zone ovale colorée, est compris(e) entre 5 et 15 mm, de préférence entre 7 et 12 mm, et est en particulier proche de 10 mm. La zone colorée est centrée sur un point situé à une distance d1 comprise entre 5 et 10 mm, préférentiellement égale à 7,5 mm, en dessous respectivement du centre géométrique ou optique de la lentille afocale ou unifocale, et à une distance d2 comprise entre 1 et 4 mm, préférentiellement 2,5 mm, du centre géométrique ou optique en se déplaçant horizontalement vers le nez.

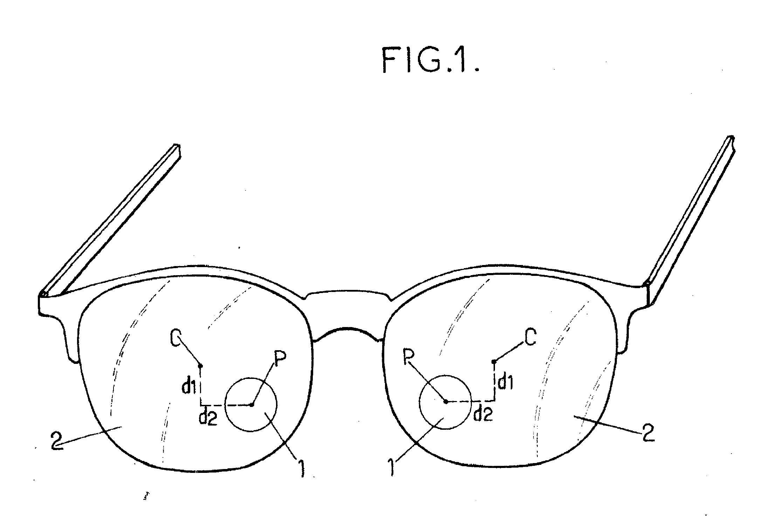

La figure 1 illustre ce mode de réalisation et la localisation de la zone colorée recouvrant la zone explorée par l'oeil en mode lecture. Cette figure montre des lunettes avec deux lentilles unifocales de centre optique C. La zone colorée 1, ici de forme circulaire, est centrée sur un point P située à une distance d1 en dessous du centre optique C et à une distance d2 du centre optique C en direction vers le nez. La zone incolore 2 couvre la totalité de la surface non occupée par la zone colorée.

En plus des lentilles afocales et monofocales, la présente invention peut s'appliquer à d'autres types de lentilles, notamment les lentilles progressives. Ce type de lentille est remarquable en ce qu'elle possède deux centres optiques, c'est-à-dire un centre optique de vision de loin et un centre optique de vision de près, reliés par un couloir de progression qui permet à l'oeil de passer d'une vision de loin à une vision de près en douceur, procurant ainsi un véritable confort visuel au porteur.

Un mode de réalisation particulier de l'invention a donc pour objet une lentille ophtalmique correctrice progressive avec un centre optique de vision de loin et un centre optique de vision de près. Dans le cas d'une telle lentille, la zone colorée est de préférence de forme circulaire ou ovale et est centrée autour du centre optique de vision de près. Avantageusement, le diamètre de la zone colorée circulaire, ou la dimension la plus importante de la zone colorée ovale, est compris(e) entre 5 et 15 mm, de préférence entre 7 et 12 mm, et est en particulier proche de 10 mm.

Les dimensions de la zone colorée indiquées ci-dessus correspondent aux fourchettes appropriées pour la plupart des porteurs de lunettes, mais ne tiennent pas compte des différences individuelles. Or, on comprendra aisément qu'il est avantageux de limiter le plus possible la dimension de la zone colorée à celle de la zone réellement explorée par l'oeil humain lors de la lecture, de manière à limiter au maximum les pertubations de la vision normale des couleurs. Une telle optimisation des dimensions relatives de la zone colorée peut être effectuée par exemple grâce à la technologie *Vision Print System* (VPS) développée par la Demanderesse dans le contexte d'autres recherches concernant le comportement visuel. Il s'agit d'un appareil permettant de décrire les différences interindividuelles de stratégie de coordination des yeux et de la tête dans l'exploration visuelle de l'environnement, appelé aussi « comportement oeil-tête ». Ainsi peuvent être définis, d'un côté, des individus plutôt « bougeurs de tête » (en anglais *head mover)* ayant tendance à suivre visuellement un objet par un mouvement de la tête plutôt que par un mouvement de l'oeil, et, de l'autre côté, des individus plutôt « bougeurs d'oeil » (en anglais *eye mover)* ayant tendance à suivre visuellement un objet avec les yeux plutôt qu'avec la tête.

La détermination du comportement ceil-tête d'un porteur de lunettes, permet ainsi d'optimiser la taille de la zone colorée. Si le porteur à tendance à tourner sa tête plutôt que ses yeux pour suivre du regard un objet, un filtre coloré de 5 à 10 mm, est généralement suffisant pour couvrir toute la zone de vision de près du verre. Inversement, si le porteur à tendance à bouger ses yeux plutôt que sa tête pour suivre du regard un objet, alors un filtre coloré couvrant une zone relativement plus large est recommandée, par exemple une zone ayant un diamètre compris entre 10 à 15 mm.

La présente invention prévoit également un autre mode de réalisation original. Des études ont révélées que, outre les troubles de lecture, la majorité des dyslexiques présentent également un déficit particulier du contrôle de la posture appelé Syndrome de Déficience Posturale ou SDP tel que décrit dans Quercia et al. ,J. Fr.Ophtalmol. ,2005 ;28, 7, 713-723*.* Cette étude clinique a permis de montrer que sur les 60 patients dyslexiques examinés, 100% présentaient des signes physiques permettant d'établir le diagnostic de syndrome de déficience posturale (SDP). La très grande majorité des cas observés (97%) était atteinte d'un SDP mixte pur. Le SDP est une affection associant des troubles de l'équilibre, des douleurs diverses et des signes ophtalmologiques. Le syndrome de déficience posturale est aujourd'hui souvent traité par la prescription de prismes posturaux ; voir Quercia P., Robichon F., & Alves da Silva, O. (2004) Dyslexie de développement et proprioception - Approche clinique et thérapeutique, Association Graine de Lecteur, Bea*une.*

De tels prismes posturaux permettent de corriger les anomalies proprioceptives en agissant sur les recepteurs proprioceptifs des muscles oculomoteurs. Les prismes entraînent chez le patient une modification de sa localisation spatiale en agissant sur son équilibre sensoriel global et sur les mouvements de coordination tête-oeil. Au final il en résulte une amélioration des performances cognitives et des capacités de lecture des dyslexiques.

Ainsi, dans un mode de réalisation préféré de la présente invention, les lentilles ophtalmiques telles que décrites plus haut comprennent en outre un prisme postural.

La prescription de prismes posturaux pour traiter le syndrome de déficience posturale est très bien décrite dans la littérature scientifique et médicale. Par exemple, Quercia P., Robichon F., & Alves da Silva, O. (2004) Dyslexie de développement et proprioception-Approche clinique et thérapeutique. Association Graine de Lecteur, Bea*une,* propose de traiter les SDP mixtes purs avec des prismes posturaux agissant sur les deux muscles petits obliques : un premier prisme avec une base à 125° devant l'oeil droit et un deuxième prisme avec une base à 55° devant l'oeil gauche, avec une puissance de 2 et 3 dioptries, le prisme le plus fort étant positionné du coté où la rotation de la tête est la plus limitée. Les prismes obliques agissent en particulier sur les muscles rotateurs et extenseurs des deux membres inférieurs, mais avec une action asymétrique : l'action de relaxation est plus importante du coté opposé au prisme le plus fort.

D'autres types de prescriptions de prismes sont décrites, et l'homme de l'art est à même d'adapter la forme et la puissance du prisme à chaque patient, selon son degré de déficience posturale. Une majorité de dyslexiques présente un SDP mixte pur, mais il existe également des patients atteints de SDP mixte prédominant gauche, SDP mixte prédominant droit, SDP pur gauche ou encore atteints de SDP pur droit. A chaque type de SDP correspond un traitement prismatique différent, avec prescription de prismes sur les deux yeux ou sur un seul des deux yeux.

Il est bien connu de l'homme du métier que toute lentille prismatique peut également être correctrice. L'invention a donc également pour objet des lentilles ophtalmiques correctrices, monofocales ou progressives, comprenant en outre un prisme postural.

L'application de la coloration sur des supports appropriés en verre minéral ou organiques en vue de la fabrication d'une lentille ophtalmique selon l'invention peut se faire par exemple par sublimation et/ou par impression par jet d'encre. Ces techniques sont décrites par exemple dans les demandes de brevet WO 2006/079564 et FR 2 881 230 au nom de la Demanderesse. On peut également envisager l'application sur un substrat d'un film pixellisé combinée à une technologie d'impression jet d'encre tel que décrit dans la demande de brevet WO 2006/013250.

La présente invention sera mieux comprise à la lecture des exemples suivants qui illustrent de façon non limitative l'objet de l'invention.

### Exemple 1 : Coloration jaune de lentilles ophtalmiques selon l'invention par impression par jet d'encre

On mélange sous agitation magnétique 40 % en poids de polyuréthanne anionique (W234 commercialisé par la société Baxenden) avec 60 % en poids de silice colloïdale (Ludox TM40 commercialisé par la société Aldrich). Après une heure d'agitation, on dépose le mélange obtenu par centrifugation (*spin coating*) sur un substrat biplan Orma™ (500 tours/20 secondes). Le dépôt est séché pendant 1h à 100°C à l'étuve. L'épaisseur du primaire ainsi obtenu est de 3.6 µm. Après séchage, la lentille optique comprenant le primaire et le substrat peut être imprimée avec une imprimante Canon i865. La zone jaune est dessinée à l'aide du logiciel Powerpoint™. La lentille ophtalmique est introduite dans le module de chargement de l'imprimante, celle-ci étant reliée à l'ordinateur comprenant le fichier "filtre jaune" sous Powerpoint™. L'impression est réalisée. Lorsque la lentille sort de l'imprimante, elle est immédiatement séchée 1h à 100°C. On obtient une lentille ophtalmique avec un filtre jaune.

## Revendications

1. Lentille ophtalmique, à l'exclusion des lentilles de contact directement posées sur l'oeil, **caractérisée en ce que** :
elle comprend, à sa surface, une zone colorée dont l'étendue est limitée à la zone de la lentille explorée par l'oeil en activité de lecture, le reste de la lentille étant incolore, et par le fait qu'elle comprend en outre un prisme postural ;
la zone colorée présente une transmission inférieure ou égale à 50% dans le domaine des longueurs d'ondes comprises entre 400nm et 480 nm ;
la zone colorée est de couleur jaune, jaune-orangé ou orange ;
la zone colorée a une forme circulaire ou ovale et est centrée sur un point situé à une distance comprise entre 5 et 10mm en dessous du centre géometrique ou optique du verre et à une distance comprise entre 1 et 4 mm, préférentiellement égale à 2,5 mm, du centre géométrique ou optique en se déplaçant horizontalement vers le nez.
et le diamètre ou la dimension la plus importante de la zone colorée est compris entre 5 et 15 mm.

## Patentansprüche

1. Ophthalmische Linse, ausschließlich direkt auf das Auge platzierter Kontaktlinsen, **dadurch gekennzeichnet, dass**:
sie auf ihrer Oberfläche einen gefärbten Bereich umfasst, dessen Erstreckung auf den Bereich der Linse begrenzt ist, der bei der Lesetätigkeit vom Auge abgetastet wird, wobei der Rest der Linse nicht gefärbt ist, und dass sie ferner ein Postural-Prisma umfasst,
der gefärbte Bereich im Wellenlängenbereich zwischen 400 nm und 480 nm eine Transmission von kleiner oder gleich 50% aufweist,
der gefärbte Bereich gelb, gelb-orange oder orange ist,
der gefärbte Bereich kreisförmig oder oval ist und auf einen Punkt zentriert ist, der in einem Abstand zwischen 5 und 10 mm unter der geometrischen oder optischen Mitte des Glases und in einem Abstand zwischen 1 und 4 mm, vorzugsweise 2,5 mm,
von der geometrischen oder optischen Mitte angeordnet ist, unter horizontaler Verschiebung zur Nase hin,
und der Durchmesser oder die größte Abmessung des gefärbten Bereichs zwischen 5 und 15 mm beträgt.

## Claims

1. Ophthalmic lens, excluding contact lenses placed directly on the eye, **characterized in that**:
it comprises, on its surface, a coloured zone the extent of which is limited to the zone of the lens explored by the eye during reading activities, the rest of the lens being colourless, and **in that** it furthermore comprises a postural prism;
the coloured zone has a transmittance lower than or equal to 50% in the wavelength domain comprised between 400 nm and 480 nm;
the coloured zone is yellow, orange-yellow or orange in colour;
the coloured zone has a circular or oval shape and is centred on a point located at a distance comprised between 5 and 10 mm below the geometrical or optical centre of the eyeglass and, moving horizontally toward the nose, at a distance comprised between 1 and 4 mm and preferably equal to 2.5 mm from the geometrical or optical centre; and the diameter or the largest dimension of the coloured zone is comprised between 5 and 15mm.
